# EUROPÄISCHE PATENTSCHRIFT

(11) **EP 2 671 760 B1**
(45) Veröffentlichungstag und Bekanntmachung des Hinweises auf die Patenterteilung: **07.03.2018**
(21) Anmeldenummer: 13181738.9
(22) Anmeldetag: 09.11.2009
(51) Int. Cl.: B60R 16/02, C09J 7/04

(54) **Quereinreißbares Gewebeklebeband mit hoher Abriebfestigkeit**
Transversely tearable textile adhesive tape having high abrasion resistance
Bande adhésive de tissu à déchirement transversal ayant une résistance à la friction élevée

(43) Veröffentlichungstag der Anmeldung: 11.12.2013
(62) Teilanmeldung aus: 09175415.0
(73) Patentinhaber: Coroplast Fritz Müller GmbH & Co. KG, 42279 Wuppertal (DE)
(72) Erfinder: Lodde, Christoph, 59439 Holzwickede (DE); Wittig, Gülay, 44799 Bochum (DE)
(74) Vertreter: Patent- und Rechtsanwälte Dr. Solf & Zapf

(56) Entgegenhaltungen:
- EP-A1- 1 074 595
- EP-A1- 1 911 633
- EP-A1- 1 990 393
- EP-A1- 2 298 845
- EP-A2- 2 050 803
- DE-T2- 60 031 332
- US-A- 5 698 477

## Beschreibung

Die vorliegende Erfindung betrifft ein Gewebeklebeband, insbesondere ein Kabelwickelband, bestehend aus einem bandförmigen Gewebeträger mit einer mindestens einseitigen Klebebeschichtung, wobei der Gewebeträger aus Kettfäden und Schussfäden hergestellt ist und die Fadenstärke (Titer) in dtex der Schussfäden größer ist als die Fadenstärke (Titer) in dtex der Kettfäden sowie die auf die Breite bezogene Fadenstärke in dtex/cm der Kettfäden kleiner ist als die auf die Länge bezogene Fadenstärke in dtex/cm der Schussfäden.

Ein derartiges Klebeband ist aus der EP 1 074 595 B1 bekannt. Hierbei beträgt die Anzahl der Kettfäden pro cm 30 bis 50, die auf die Breite bezogene Fadenstärke dtex/cm ist kleiner 2.500 und die Anzahl der Schussfäden beträgt 18 bis 27. Hierbei werden die Kettfäden durch die Klebebeschichtung gegenüber den Schussfäden fixiert, so dass die Reißfestigkeit in Querrichtung weniger als 10 N beträgt. Ein derartiges Klebeband besitzt zwar eine hinreichende Quereinreißbarkeit von Hand, besitzt aber den Nachteil, dass auf Grund einer niedrigen Webdichte eine Verschiebung der Schussfäden auftritt, weshalb es notwendig ist, die Kettfäden und die Schussfäden durch die Klebebeschichtung gegeneinander zu fixieren, worunter die Flexibilität leidet. Weiterhin wird nur eine geringere Abriebbeständigkeit gewährleistet, und zwar entsprechend der Abriebklasse A oder B nach LV 312. Die Abriebklassen nach LV 312 werden wie folgt unterteilt:

**Einteilung der Abriebklassen nach LV 312**

| Abriebklasse | Anforderung am 5 mm Dorn |
|---|---|
| A kein Abriebschutz | < 100 Hübe |
| B geringer Abriebschutz | 100 - 499 Hübe |
| C mittlerer Abriebschutz | 500 - 999 Hübe |
| D hoher Abriebschutz | 1000 - 4999 Hübe |
| E sehr hoher Abriebschutz | ≥ 5000 - 14999 Hübe |
| F extrem hoher Abriebschutz | ≥ 15.000 Hübe |

Aus der EP 1 990 393 A1 ist ein Klebeband bekannt, dass aus einem Gewebeträger besteht, bei dem die Anzahl der Kettfäden 30 bis 50 beträgt und die auf die Breite bezogene Stärke der Kettfäden 2.950 dtex/cm ist sowie die Stärke der Schussfäden in Bezug auf die Bandlänge 5.200 dtex/cm ist. Bei diesem Band ist eine zusätzliche Fixierung der Kett- und Schussfäden zueinander erforderlich. Auch ein derartiges Klebeband ist gut handeinreißbar, besitzt aber nur eine geringe Abriebbeständigkeit, und zwar der Klasse A nach LV 312. Ein auf dem Markt befindliches Klebeband der Anmelderin, welches einen Aufbau gemäß der EP 1 990 393 A1 aufweist, trägt die Bezeichnung "Coroplast 839".

Der vorliegenden Erfindung liegt die Aufgabe zu Grunde, ausgehend von einem Klebeband der eingangs beschriebenen Art, dieses derart zu verbessern, dass eine gute Verbundfestigkeit ohne zusätzliche Fixierungsmaßnahmen der Kett- und Schussfäden vorhanden ist und somit eine gute Handeinreißbarkeit erreicht wird sowie eine Abriebbeständigkeit gemäß den Klassen C oder D nach LV 312 erreicht wird.

Erfindungsgemäß wird dies durch ein Klebeband gemäß dem Anspruch 1 erreicht.

Die Erfindung basiert dabei auf der Erkenntnis, dass durch die erfindungsgemäße längenbezogene Fadenstärke der Schussfäden bzw. die erfindungsgemäße Fadenstärke der Schussfäden, die jeweils mindestens etwa das vierfache der erfindungsgemäßen breitenbezogenen Fadenstärke der Kettfäden bzw. der Fadenstärke der Kettfäden beträgt, eine ausreichende Verbundfestigkeit des Trägergewebes erzielt wird, wenn
- der Schussfaden als Einzelfaden mit einer Fadenstärke von 550 dtex ausgebildet ist, oder
- der Schussfaden aus zwei Einzelfäden gebildet ist, wobei der eine Einzelfaden eine Stärke von 220 dtex und der andere Einzelfaden eine Stärke von 330 dtex besitzt, oder
- die Schussfäden aus drei bis fünf Einzelfäden gebildet sind, und die Stärke der einzelnen Einzelfäden jeweils 167 dtex (nomineller Titer) ist,
wobei die Anzahl der Kettfäden pro cm Bandbreite im Bereich von 27 bis 60 liegt, wobei die Klebebeschichtung derart ausgebildet ist, dass nur eine Oberflächenbeschichtung vorhanden ist, so dass die Kett- und Schussfäden nicht durch die Klebebeschichtung gegeneinander an ihren Kreuzungsstellen fixiert sind, wobei der Gewebeträger aus einem Polyester-Gewebe besteht oder einen Polyesterkettfaden und einen Polyamidschussfaden besitzt, und wobei eine Abriebbeständigkeit mindestens der Klasse C gemäß LV 312 - gemessen am 5-mm-Dorn - vorliegt.

Erfindungsgemäß ist somit eine gute Handeinreißbarkeit, d. h., die erwünschte Handeinreißbarkeit in Richtung der Schussfäden, sichergestellt, wobei gleichzeitig durch die erfindungsgemäße Fadenstärke der Schussfäden eine Abriebfestigkeit gemäß der Klasse größer/gleich C, insbesondere D gemäß LV 312 ermöglicht wird. Die Kett- und Schussfäden bestehen aus Polyester (PET), so dass das Gewebe verrottungsfest ist. Alternativ können auch Schussfäden aus Polyamid (PA) verwendet werden.

Weitere vorteilhafte Ausführungen der Erfindung sind in den Unteransprüchen enthalten und werden an Hand der folgenden Ausführungsbeispiele und der beiliegenden Zeichnungen näher erläutert. Dabei zeigen:
- Fig. 1: einen Grundaufbau eines erfindungsgemäßen Gewebeträgers und
- Fig. 2: einen Schnitt durch ein erfindungsgemäßes Klebeband mit einem Gewebeträger gemäß Fig. 1.

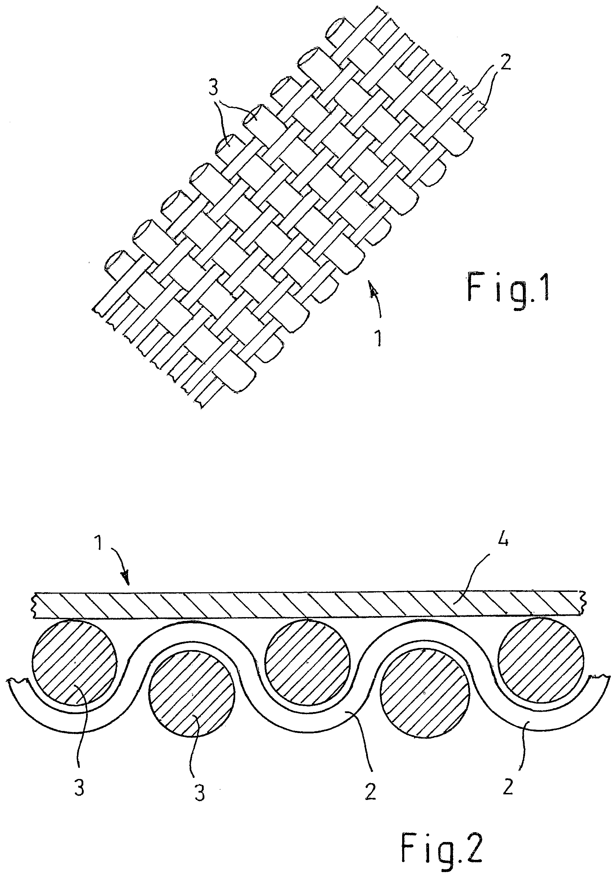

In den verschiedenen Figuren der Zeichnung sind gleiche Teile stets mit denselben Bezugszeichen versehen, so dass sie in der Regel auch jeweils nur einmal beschrieben werden.
Wie in Fig. 1 dargestellt ist, besteht ein erfindungsgemäßer Gewebeträger 1, der bandförmig ausgebildet ist, d. h. dessen Länge größer ist als dessen Breite, aus einem Gewebe aus in Bandlängsrichtung verlaufenden Kettfäden 2 sowie aus quer zu den Kettfäden 2, insbesondere senkrecht zu den Kettfäden 2 verlaufenden Schussfäden 3.

Die längenbezogene Fadenstärke der Schussfäden 3 in dtex/cm beträgt das Vierbis Fünffache der breitenbezogenen Fadenstärke der Kettfäden 2 in dtex/cm, wobei die auf die Breite bezogene Fadenstärke der Kettfäden 22.000 bis 4.000 dtex/cm und die auf die Länge bezogene Fadenstärke der Schussfäden 38.000 bis 16.000 dtex/cm beträgt. Die Fadenstärke der Schussfäden 3 ist gemäß Anspruch 1. Hierbei handelt es sich um ein übliches Gewebe.

Der erfindungsgemäße Gewebeträger 1 kann vorteilhafterweise bereits gewaschen, thermofixiert bzw. fixiert und kalandriert sein. Die erfindungsgemäß verwendeten Kettfäden 2 und Schussfäden 3 können als Monofil-Fäden ausgebildet sein oder aber als sogenanntes Filamentgarn, bei dem mehrere Fasern versponnen sind und den einzelnen Kett- bzw. Schussfaden 2, 3 bilden. Vorteilhafterweise sind die erfindungsgemäß verwendeten Kett- und/oder Schussfäden 2, 3 aus Filamentgarnen gebildet, die durch Intermingeln weiterverarbeitet sind. Hierbei wird den Filamentgarnen eine zusätzliche Drehung (auch Schutzdrall genannt) aufgebracht, um das einzelne Filament vor Beschädigungen zu schützen und bereits gebrochene Kapilare zum Aufschieben zu Flusen zu verhindern. Bei dem Interminglingverfahren handelt es sich um ein Luftverwirbelungsverfahren, bei der das Filamentgarn bei der Bewegung durch eine Düse mit Pressluft verwirbelt wird. Die erfindungsgemäßen Kett- und Schussfäden 2, 3 bestehen vorzugsweise aus Polyester, jedoch können gemäß Anspruch 1 auch andere synthetische Chemiefasern Verwendung finden.

In Fig. 2 ist ein Schnitt durch ein erfindungsgemäßes Klebeband dargestellt, woraus zu erkennen ist, dass auf dem textilen Gewebeträger 1 eine Klebebeschichtung 4 oberflächlich, d. h. mit geringer Eindringtiefe in den Gewebeträger 1 aufgebracht ist. Hierbei handelt es sich vorteilhafterweise um einen Acrylatkleber. Das Klebstoffgewicht der Klebebeschichtung beträgt vorteilhafterweise 75 bis 80 g/qm. In der nachfolgenden Tabelle 1 sind Ausführungsbeispiele des erfindungsgemäßen Klebebandes aufgeführt.

Hieraus ergibt sich, dass einerseits das erfindungsgemäße Klebeband eine hohe Abriebfestigkeit gemäß LV 312 besitzt, und zwar im Wesentlichen eine Abriebfestigkeit der Klasse D sowie eine geringe Reißdehnung sowie Bruchkraft, so dass eine gute Handeinreißbarkeit gegeben ist.

Die Dicke eines erfindungsgemäßen Klebebandes beträgt zwischen 0,25 bis 0,30 mm, insbesondere 0,25 bis 0,27 mm, und zwar einschließlich der aufgebrachten Klebebeschichtung 4.

Grundsätzlich bestehen hier erfindungsgemäß die Möglichkeiten, den Schussfaden 3 als Einzelfaden (siehe hierzu Beispiel 1 der nachfolgenden Tabelle 1) oder in Kombination mit mehreren Fäden aufzubringen.

**Tabelle 1 - Beispiele 1 bis 5:**

| | **Einheit** | **Beispiel 1** | **Beispiel 2** | **Beispiel 3** | **Beispiel 4** | **Beispiel 5** |
|---|---|---|---|---|---|---|
| Trägergewicht | g/m² | 150 | 140 | 130 | 150 | 150 |
| Kleber | - | Acrylat | Acrylat | Acrylat | Acrylat | Acrylat |
| Klebstoffgewicht | g/m² | 75 - 80 | 75 - 80 | 75 - 80 | 75 - 80 | 75 - 80 |
| Anzahl der Kettfäden | 1/cm | 48 | 45 | 39 | 48 | 48 |
| Anzahl der Schussfäden | 1/cm | 20 | 22 | 24 | 20 | 20 |
| Kette Fadenart | Material | PET | PET | PET | PET | PET |
| Stärke der Kettfäden | dtex | 55 | 55 | 55 | 55 | 55 |
| Schussfadenart | Material | PET | PET | PET | PET | PET |
| Stärke der Schussfäden | dtex | 550 | 550 | 440 | 220 dtex + 330 dtex (= 550 dtex) | 220 dtex + 2* 167 dtex (= 550 dtex) |
| Breitenbezogene Kettfadenstärke | dtex/cm | 2700 | 2475 | 2145 | 2700 | 2700 |
| längenbezogene Schussfadenstärke | dtex/cm | 11.000 | 12.100 | 10.560 | 11.000 | 11.000 |
| Dicke | mm | 0,25 - 0,27 | 0,26 - 0,27 | 0,22 - 0,24 | 0,25 - 0,27 | 0,25 - 0,27 |
| Reißdehnung | % | 28 - 30 | 28 - 30 | 20 - 30 | 28 - 30 | 28 - 30 |
| Bruchkraft | N/cm | 70 - 100 | 70 - 100 | 50 - 60 | 70 - 100 | 70 - 100 |
| Flagging (30 min.) | mm | i.O | i.O | i.O | i.O | i.O |
| Flagging (24 Std.) | mm | i.O | i.O | i.O | i.O | i.O |
| Abrieb mit 5mm Dorn gemäß LV 312 | Hübe | 1000 - 2000 (Klasse D) | 1000 - 2000 (Klasse D) | 300 - 500 (Klasse B/C) | 1000 - 2000 (Klasse D) | 1000 - 2000 (Klasse D) |
| Quereinreißbarkeit gemäß LV 312 | ./. | Gegeben | Gegeben | Gegeben | Gegeben | Gegeben |

**Tabelle 1 - Beispiele 6 bis 9:**

| | **Einheit** | **Beispiel 6** | **Beispiel 7** | **Beispiel 8** | **Beispiel 9** |
|---|---|---|---|---|---|
| **Trägergewicht** | **g/m²** | **140** | **140** | **140** | **140** |
| Kleber | - | Acrylat | Acrylat | Acrylat | Acrylat |
| Klebstoffgewicht | g/m² | 75 - 80 | 75 - 80 | 75 - 80 | 75 - 80 |
| Anzahl der Kettfäden | 1/cm | 35 | 27 | 48 | 35 |
| Anzahl der Schussfäden | 1/cm | 20 | 20 | 20 | 20 |
| Kette Fadenart | Material | PET | PET | PET | PET |
| Stärke der Kettfäden | dtex | 84 | 84 | 55 | 84 |
| Schussfadenart | Material | PET | PET | PA | PA |
| Stärke der Schussfäden | dtex | 220 550 | 220 dtex + 2 * 167 dtex (= 550 dtex) | 470 | 235 dtex + 2 * 167 dtex (= 570 dtex) |
| Breitenbezogene Kettfadenstärke | dtex/cm | 2940 | 2270 | 2700 | 2940 |
| längenbezogene Schusstadenstärke | dtex/cm | 11.000 | 11.000 | 9.400 | 11.380 |
| Dicke | mm | 0,25 - 0,27 | 0,25 - 0,27 | 0,25 - 0,27 | 0,25 - 0,27 |
| Reißdehnung | % | 28 - 30 | 28 - 30 | 28 - 30 | 28 - 30 |
| Bruchkraft | N/cm | 70 - 100 | 70 - 100 | 70-100 | 70 - 100 |
| Flagging (30 min.) | mm | i.O | i.O | i.O | i.O |
| Flagging (24 Std.) | mm | i.O | i.O | i.O | i.O |
| Abrieb mit 5mm Dorn gemäß LV 312 | Hübe be | 1000 - 2000 (Klasse D) | 1000 - 2000 (Klasse D) | 1500 - 3500 (Klasse D) | 1500 - 3500 (Klasse D) |
| Quereinreißbarkeit gemäß LV 312 | ./. | Gegeben | Gegeben | Gegeben | Gegeben |

Bei den Beispielen 3 und 7-9 handelt es sich um Vergleiches- bzw. Referenzbeispiele.

Wie sich insbesondere aus den Ausführungen gemäß Beispiel 4 und 5 ergibt, ist es im Rahmen der Erfindung als Alternative vorgesehen, den Schussfaden 3 aus mehreren Einzelfäden insbesondere unterschiedlicher Fadenstärke herszustellen, wobei beispielsweise der Schussfaden 3 gemäß der Ausführung 4 aus zei Einzelfäden besteht, und zwar einem Einzelfaden mit 220 dtex Fadenstärke und einem Einzelfaden mit 330 dtex Fadenstärke, so dass sich eine Gesamtfadenstärke von 550 dtex ergibt.

Im Ausführungsbeispiel 5 werden die Schussfäden 3 erfindungsgemäß aus drei Einzelfäden gebildet, wobei ein Einzelfaden eine Fadenstärke von 220 dtex (nominelle Fadenstärke) besitzt und die beiden anderen Einzelfäden jeweils eine Fadenstärke von 167 dtex (nominelle Fadenstärke), woraus sich eine Gesamtfadenstärke von 550 dtex (nominelle Schussfadenstärke) ergibt.

In der nachfolgenden Tabelle 2 sind zwei auf dem Markt befindliche Gewebeklebebänder aufgeführt, woraus sich ergibt, dass das Klebeband Coroplast 83 gemäß EP 1 990 393 A1 eine geringe Abriebfestigkeit, nämlich die der Klasse B besitzt, wohingegen das Klebeband gemäß Coroplast 837 X eine hohe Abriebfestigkeit, nämlich gemäß Klasse D aufweist, jedoch nicht quereinreißbar von Hand ist. Das erfindungsgemäße Klebeband, insbesondere gemäß den Beispielen der Tabelle 1, verbindet demgegenüber eine gute Quereinreißbarkeit von Hand mit einer hohen Abriebfestigkeit, insbesondere gemäß Klasse D.

Die vorliegende Erfindung bezieht sich auch auf die Verwendung des bandförmigen, vorstehend beschriebenen Gewebeträger 1 ohne die Klebebeschichtung 4 zur Herstellung eines erfindungsgemäßen Klebebandes.

**Tabelle 2:**

| | **Einheit** | **Coroplast 839** EP 1990393 A1 | **Coroplast 837 X** |
|---|---|---|---|
| Trägergewicht | g/m² | 115 - 118 | 130 |
| Kleber | - | Acrylat | Acrylat |
| Klebstoffgewicht | g/m² | 42 - 48 | 80 - 100 |
| Anzahl der Kettfäden | 1/cm | 48 | 45 |
| Anzahl der Schussfäden | 1/cm | 30 | 25 |
| Stärke der Kettfäden | dtex | 55 | 167 |
| Stärke der Schussfäden | dtex | 334 bzw. 167 (2x) | 167 |
| Breitenbezogene Kettfadenstärke | dtex/cm | 2700 | 7500 |
| Längenbezogene Schussfadenstärke | dtex/cm | 10.000 | 4100 |
| Dicke | mm | 0,18 - 0,21 | 0,24 - 0,27 |
| Reißdehnung | % | 20 - 50 | 30 - 60 |
| Bruchkraft | N/cm | 65 - 100 | 210 - 320 |
| Abrieb mit 5mm Dorn gemäß LV 312 | Hübe | 100 - 499 (Klasse B) | 1000 - 2000 (Klasse D) |
| Quereinreißbarkeit | ./. | gegeben | nicht gegeben |

Das erfindungsgemäße Klebeband, wie es in den Ansprüchen sowie in den Ausführungsbeispielen beschrieben ist, besitzt eine Abriebbeständigkeit der Klassen C und D gemäß LV 312, eine gute Schmiegsamkeit bzw. ein gutes Flaggingverhalten, wie in der Tabelle 1 dargestellt.

Da auf Grund der erfindungsgemäßen Ausbildung des Gewebeträgers 1 bereits eine ausreichende Stabilität des Gewebeträgers 1 erreicht wird, kann eine Beschichtung der Klebebeschichtung 4 im Düsenverfahren oder aber auch im Curtain-Coating-Verfahren erfolgen, denn erfindungsgemäß ist es nicht vorgesehen, dass die Klebstoffschicht zur Fixierung der Kett- und Schussfäden 2, 3 an ihren Kreuzungsstellen untereinander tief in den Gewebeträger 1 eindringt. Vielmehr ist es erfindungsgemäß so, dass die Klebebeschichtung 4 auf Grund des gewählten Auftragungsverfahrens auf den Kettfäden 2 und den Schussfäden 3 im Wesentlichen nur oberflächlich aufliegt. Zudem ist auf Grund einer Reißdehnung in % von 28 bis 30 eine gute Handeinreißbarkeit vorhanden, wobei eine Bruchkraft von 70 bis 100 N/cm nicht überschritten wird.

## Patentansprüche

1. Handeinreißbares, abriebfestes Gewebeklebeband, insbesondere Kabelwickelband, bestehend aus einem bandförmigen Gewebeträger (1) mit einer mindestens einseitigen Klebebeschichtung (4), wobei der Gewebeträger (1) aus Kettfäden (2) und Schussfäden (3) hergestellt ist und die Fadenstärke (Titer) in dtex der Schussfäden (3) größer ist als die Fadenstärke (Titer) in dtex der Kettfäden (2) sowie die auf die Breite bezogene Fadenstärke in dtex/cm der Kettfäden (2) kleiner ist als die auf die Länge bezogene Fadenstärke in dtex/cm der Schussfäden (3), wobei jeweils die auf die Breite bezogene Fadenstärke der Kettfäden (2) im Bereich von 2.000 bis 4.000 dtex/cm und die auf die Länge bezogene Fadenstärke der Schussfäden (3) im Bereich von 8.000 dtex/cm bis 16.000 dtex/cm liegt, wobei
- der Schussfaden (3) als Einzelfaden mit einer Fadenstärke von 550 dtex ausgebildet ist, oder
- der Schussfaden (3) aus zwei Einzelfäden gebildet ist, wobei der eine Einzelfaden eine Stärke von 220 dtex und der andere Einzelfaden eine Stärke von 330 dtex besitzt, oder
- die Schussfäden (3) aus drei bis fünf Einzelfäden gebildet sind, und die Stärke der einzelnen Einzelfäden jeweils 167 dtex (nomineller Titer) ist,
- die Anzahl der Kettfäden (2) pro cm Bandbreite im Bereich von 27 bis 60 liegt,
- die Klebebeschichtung (4) derart ausgebildet ist, dass nur eine Oberflächenbeschichtung vorhanden ist, so dass die Kett- und Schussfäden (2, 3) nicht durch die Klebebeschichtung (4) gegeneinander an ihren Kreuzungsstellen fixiert sind,
- der Gewebeträger (1) aus einem Polyester-Gewebe besteht oder einen Polyesterkettfaden (2) und einen Polyamidschussfaden (3) besitzt,
wobei eine Abriebbeständigkeit mindestens der Klasse C gemäß LV 312 - gemessen am 5-mm-Dorn - vorliegt.

2. Gewebeklebeband nach Anspruch 1,
**dadurch gekennzeichnet, dass** die Fadenstärke (Titer) in dtex der Kettfäden (2) größer/gleich 50 dtex, insbesondere 55 dtex oder 84 dtex beträgt.

3. Gewebeklebeband nach Anspruch 1 oder 2,
**dadurch gekennzeichnet, dass** die Anzahl der Schussfäden (3) pro cm Bandlänge im Bereich von 16 bis 32, insbesondere im Bereich von 20 bis 24 liegt.

4. Gewebeklebeband nach einem der Ansprüche 1 bis 3,
**dadurch gekennzeichnet, dass** die Anzahl der Kettfäden (2) 'pro cm Bandbreite im Bereich von 35 bis 48 liegt.

5. Gewebeklebeband nach einem der Ansprüche 1 bis 4,
**dadurch gekennzeichnet, dass** die auf die Länge bezogene Fadenstärke der Schussfäden (3) im Bereich von 9.000 dtex/cm bis 12.100 dtex/cm liegt, wobei sie insbesondere 11.000 dtex/cm beträgt.

6. Gewebeklebeband nach einem der Ansprüche 1 bis 5,
**dadurch gekennzeichnet, dass** die Kett- und/oder Schussfäden (2, 3) aus Filamentgarnen bestehen, wobei insbesondere die aus einzelnen Filamenten gebildeten Kett- und/oder Schussfäden (2, 3) unterschiedliche Anzahlen von Filamenten besitzen.

7. Gewebeklebeband nach einem der Ansprüche 1 bis 6,
**dadurch gekennzeichnet, dass** die Kett- und/oder Schussfäden (2, 3) aus glatten Fäden bestehen.

8. Verwendung eines bandförmigen Gewebeträgers (1), bestehend aus Kett- und Schussfäden (2, 3), mit den Merkmalen des Gewebeträgers (1) nach einem oder mehreren der Ansprüche 1 bis 7 zur Herstellung eines Gewebeklebebandes.

## Claims

1. Hand-tearable abrasion-resistant woven-fabric adhesive tape, more particularly cable-wrapping tape, consisting of a tape-shaped woven-fabric backing (1) having an at least one-sided adhesive coating (4), wherein the woven-fabric backing (1) is formed from warp threads (2) and weft threads (3) and the linear density of the weft threads (3) in dtex is greater than the linear density of the warp threads (2) in dtex and also the width-based linear density of the warp threads (2) in dtex/cm is less than the length-based linear density of the weft threads (3) in dtex/cm, wherein in each case the width-based linear density of the warp threads (2) is in the range from 2000 to 4000 dtex/cm and the length-based linear density of the weft threads (3) is in the range from 8000 dtex/cm to 16 000 dtex/cm, wherein
- the weft thread (3) is a single yarn with a linear density of 550 dtex, or
- the weft thread (3) is formed from two single yarns, the linear density of one of the single yarns being 220 dtex and of the other single yarn being 330 dtex, or
- the warp threads (3) are formed from three to five single yarns which each have a nominal linear density of 167 dtex,
- the adhesive coating (4) is formed such that there is only a surface coating and hence the adhesive coating (4) does not fix the warp and weft threads (2, 3) relative to each other at their crossing points,
- the woven-fabric backing (1) consists of a woven polyester fabric or has a polyester warp thread (2) and a polyamide weft thread (3),
wherein the abrasion resistance is at least equal to LV 312 class C - measured on a 5 mm mandrel.

2. Woven-fabric adhesive tape according to Claim 1, **characterized in that** the linear density of the warp threads (2) in dtex is not less than 50 dtex, more particularly 55 dtex or 84 dtex.

3. Woven-fabric adhesive tape according to Claim 1 or 2, **characterized in that** the number of weft threads (3) per cm of tape length is in the range from 16 to 32, more particularly in the range from 20 to 24.

4. Woven-fabric adhesive tape according to any one of Claims 1 to 3, **characterized in that** the number of warp threads (2) per cm of tape width is in the range from 35 to 48.

5. Woven-fabric adhesive tape according to any one of Claims 1 to 4, **characterized in that** the length-based linear density of the weft threads (3) is in the range from 9000 dtex/cm to 12 100 dtex/cm, wherein it is more particularly 11 000 dtex/cm.

6. Woven-fabric adhesive tape according to any one of Claims 1 to 5, **characterized in that** the warp and/or weft threads (2, 3) consist of filament yarns wherein, more particularly, the warp and/or weft threads (2, 3) formed from individual filaments have different numbers of filaments.

7. Woven-fabric adhesive tape according to any one of Claims 1 to 6, **characterized in that** the warp and/or weft threads (2, 3) consist of flat yarns.

8. Use of a tape-shaped woven-fabric backing (1) consisting of warp and weft threads (2, 3), having the features of the woven-fabric backing (1) according to one or more of Claims 1 to 7 in the manufacture of a woven-fabric adhesive tape.

## Revendications

1. Bande adhésive en tissu pouvant être déchirée à la main, résistante à l'abrasion, notamment bande d'enroulement de câble, constituée par un support en tissu en forme de bande (1) comprenant un revêtement adhésif au moins d'un côté (4), le support en tissu (1) étant fabriqué à partir de fils de chaîne (2) et de fils de trame (3) et l'épaisseur (titre) en dtex des fils de trame (3) étant supérieure à l'épaisseur (titre) en dtex des fils de chaîne (2), et l'épaisseur rapportée à la largeur en dtex/cm des fils de chaîne (2) étant inférieure à l'épaisseur rapportée à la longueur en dtex/cm des fils de trame (3), l'épaisseur rapportée à la largeur des fils de chaîne (2) se situant dans la plage allant de 2 000 à 4 000 dtex/cm et l'épaisseur rapportée à la longueur des fils de trame (3) dans la plage allant de 8 000 dtex/cm à 16 000 dtex/cm,
- le fil de trame (3) étant configuré sous la forme d'un fil simple ayant une épaisseur de 550 dtex, ou
- le fil de trame (3) étant formé par deux fils simples, un des fils simples présentant une épaisseur de 220 dtex et l'autre fil simple présentant une épaisseur de 330 dtex, ou
- les fils de trame (3) étant formés par trois à cinq fils simples, et l'épaisseur des fils simples individuels étant à chaque fois de 167 dtex (titre nominal),
- le nombre de fils de chaîne (2) par cm de largeur de bande se situant dans la plage allant de 27 à 60,
- le revêtement adhésif (4) étant configuré de sorte qu'uniquement un revêtement de surface soit présent, de sorte que les fils de chaîne et de trame (2, 3) ne soient pas fixés par le revêtement adhésif (4) les uns par rapport aux autres à leurs emplacements de croisement,
- le support en tissu (1) étant constitué par un tissu en polyester ou comprenant un fil de chaîne en polyester (2) ou un fil de trame en polyamide (3),
une résistance à l'abrasion d'au moins la classe C selon LV 312, mesurée sur un mandrin de 5 mm, étant présente.

2. Bande adhésive en tissu selon la revendication 1, **caractérisée en ce que** l'épaisseur (titre) en dtex des fils de chaîne (2) est supérieure ou égale à 50 dtex, notamment 55 dtex ou 84 dtex.

3. Bande adhésive en tissu selon la revendication 1 ou 2, **caractérisée en ce que** le nombre de fils de trame (3) par cm de longueur de bande se situe dans la plage allant de 16 à 32, notamment dans la plage allant de 20 à 24.

4. Bande adhésive en tissu selon l'une quelconque des revendications 1 à 3, **caractérisée en ce que** le nombre de fils de chaîne (2) par cm de largeur de bande se situe dans la plage allant de 35 à 48.

5. Bande adhésive en tissu selon l'une quelconque des revendications 1 à 4, **caractérisée en ce que** l'épaisseur rapportée à la longueur des fils de trame (3) se situe dans la plage allant de 9 000 dtex/cm à 12 100 dtex/cm, celle-ci étant notamment de 11 000 dtex/cm.

6. Bande adhésive en tissu selon l'une quelconque des revendications 1 à 5, **caractérisée en ce que** les fils de chaîne et/ou de trame (2, 3) sont constitués de fils continus, les fils de chaîne et/ou de trame (2, 3) formé par des filaments individuels comprenant notamment différents nombres de filaments.

7. Bande adhésive en tissu selon l'une quelconque des revendications 1 à 6, **caractérisée en ce que** les fils de chaîne et/ou de trame (2, 3) sont constitués de fils lisses.

8. Utilisation d'un support en tissu en forme de bande (1), constitué de fils de chaîne et de trame (2, 3), les caractéristiques du support en tissu (1) étant selon une ou plusieurs des revendications 1 à 7, pour la fabrication d'une bande adhésive en tissu.
